# EUROPEAN PATENT SPECIFICATION

(11) **EP 1 111 847 B1**
(45) Date of publication and mention of the grant of the patent: **04.10.2006**
(21) Application number: 00126461.3
(22) Date of filing: 07.12.2000
(51) Int. Cl.: H04L 12/413, H04Q 7/22, H04Q 3/00

(54) **System and method of telecommunications network node ethernet connectivity**
System und Verfahren zur Ethernet-Verbindung einesTelekommunikationsnetzwerksknotens
Système et méthode de connectivité ethernet de noeud de réseau de télécommunications

(30) Priority: 21.12.1999 US 171816 P; 06.04.2000 US 544661
(43) Date of publication of application: 27.06.2001
(73) Proprietor: Alcatel USA Sourcing, L.P., Plano, Texas 75075-5813 (US)
(72) Inventor: Shelton, Charles P., Frisco, Texas 75034 (US); Alladi, Syryaram, Dallas, Texas 75243 (US)
(74) Representative: Rausch, Gabriele

(56) References cited:
- WO-A-99/14910
- SINCLAIR T ET AL: "AN ENHANCED NETWORK ARCHITECTURE TO SUPPORT REPLICATED HLR DATABASES - PROTOTYPE DESIGN AND EXPERIMENTAL PERFORMANCE ANALYSIS" ICC '99. 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY: IEEE, US, vol. 2, 6 June 1999 (1999-06-06), pages 1367-1373, XP000898077 ISBN: 0-7803-5285-8

## Description

### TECHNICAL FIELD OF THE INVENTION

This invention is related in general to the field of telecommunications equipment. More particularly, the invention is related to a system and method of telecommunications network node Ethernet connectivity.

### BACKGROUND OF THE INVENTION

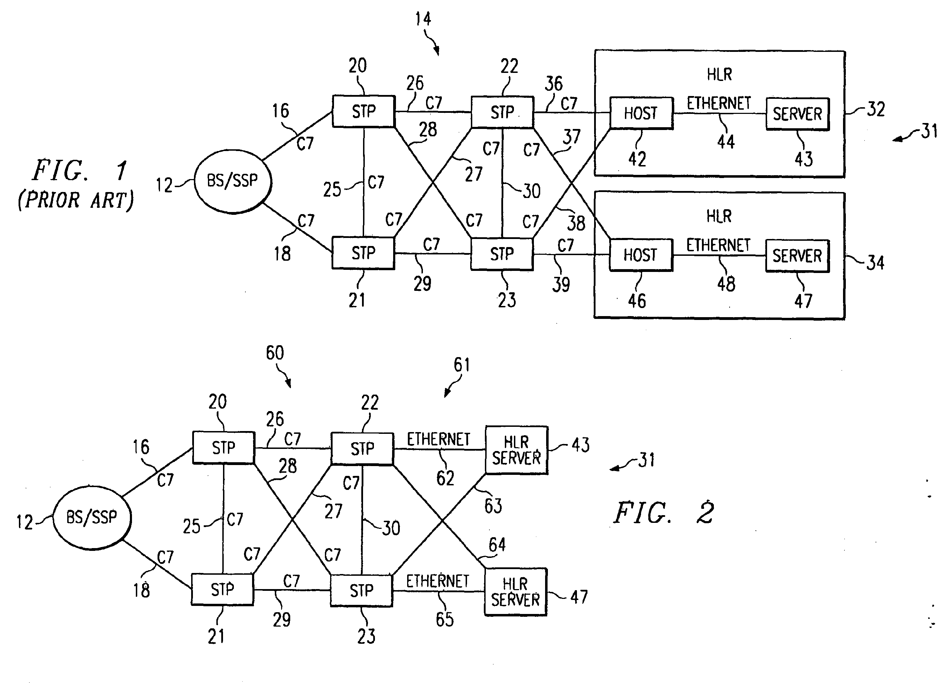

Referring to FIGURE 1, in today's telecommunications network, queries from a wireless base station or switch 12 are transmitted to home location registers (HLRs) 32 and 34 via signal transfer points (STPs) 20-23 in an SS7 network 14 over C7 or SS7 links 16, 18 and 25-39. C7 is and standard used in Europe which is the equivalent of the SS7 standard used in the United States. References herein to C7 also refer to SS7. Base station 12 may also be referred to as the mobile telephone switching office or MTSO. Home location registers 32 and 34 are typically deployed in a mated pair configuration with each containing the entire set of home location register data. During normal non-failure operation mode, each home location register performs he processing required for half of the service subscribers. In the event of a home location register failure, the remaining home location register has the ability to provide service for the entire database without loss of functionality. As shown in FIGURE 1, signal transfer points 20-23 are also configured in mated pairs and are coupled to both home location registers 32 and 34 by means of C7 links 16, 18 and 25-39. Home location register queries are transmitted via signal transfer points 20-23 to home location registers 32 and 34 using a standard protocol, such as TCAP. Home location registers 32 and 34 each includes a host 42 and 46 coupled to a server 43 and 47, respectively, via Ethernet links 44 and 48. The primary function of hosts 42 and 46 is to provide an interface for server to the SS7 network. However, the hosts are bulky and occupy several slots in the equipment frames. Further, the hosts are costly to implement and slows down the connection between the server and the signal transfer points.

The patent application document published as WO 99/14910 on 25 March 1999 presents a home location register connected via SS7 link to a network node converting SS7 network messages to TCP/IP messages and vice versa. This document also discloses visitor location register coupled to the network node via TCP/IP connection.

### SUMMARY OF THE INVENTION

The present invention defines a telecommunications network according to claim 1.

A technical advantage provided by the present invention is that high speed Ethernet connections is used instead of SS7 or C7 messaging between network nodes. In particular, home location register and/or service control point database data access will be speeded up and the general overall traffic flow will be improved.

### BRIEF DESCRIPTION OF THE DRAWINGS

For a better understanding of the present invention, reference may be made to the accompanying drawings, in which:
FIGURE 1 is a block diagram of a conventional network configuration;
FIGURE 2 is a block diagram of a telecommunications network configured according to an embodiment of the present invention;
FIGURE 3 is a block diagram of a telecommunications network node constructed according to an embodiment of the present invention;
FIGURE 4 is a message flow diagram showing the processing of messages according to an embodiment of the present invention;
FIGURE 5 is a block diagram of a telecommunications network configured according to another embodiment of the present invention; and
FIGURE 6 is a block diagram of a telecommunications network with co-located STP and HLR configured according to another embodiment of the present invention;
FIGURE 7 is a more detailed block diagram of the telecommunications network with co-located STP and HLR shown in FIGURE 6 configured according to an embodiment of the present invention; and
FIGURE 8 is a more detailed block diagram of the telecommunications network configured according to an embodiment of the present invention.

### DETAILED DESCRIPTION OF THE INVENTION

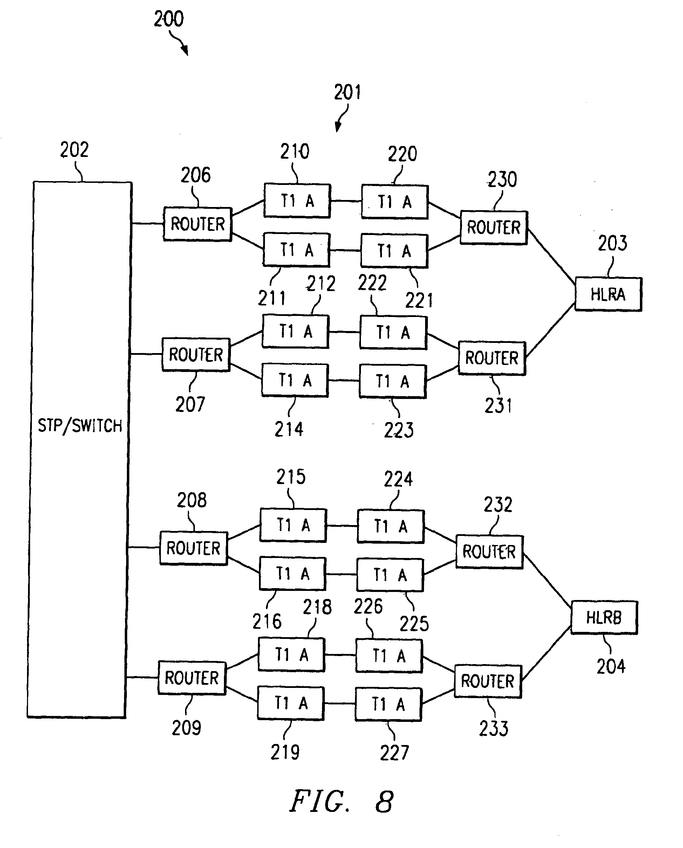

FIGURE 2 is a block diagram of a telecommunications network 60 configured according to an embodiment of the present invention. In telecommunications network 60, the home location register (HLR) hosts are removed and servers 43 and 47 are coupled directly to mated signal transfer point (STP) pair 22 and 23 via Ethernet links 61 (including links 62-65). Home location registers are databases of the wireless service provider and contains subscriber data related to features and services. Home location registers 43 and 47 are coupled to a base station (BS) 12, service switching point (SSP), or mobile telephone switching office (MTSO) 12 via an SS7 or C7 network of signal transfer points 20-23 configured as mated pairs. Signal transfer points 20-23 remain interconnected and connected to base station/service switching point 12 with C7 or SS7 links 16, 18, 25-30. Each signal transfer point is coupled to each of the mated pair of home location registers through duplex routers, as shown in FIGURE 8, described below. Because home location register servers 43 and 47 already have Ethernet connectivity, no modification is necessary. Signal transfer points 22 and 23 require a conversion or interface that converts SS7 or C7 messages to and from IS41 standard messages for wireless communications sent over Ethernet using Transmission Control Protocol/Internet Protocol (TCP/IP) .

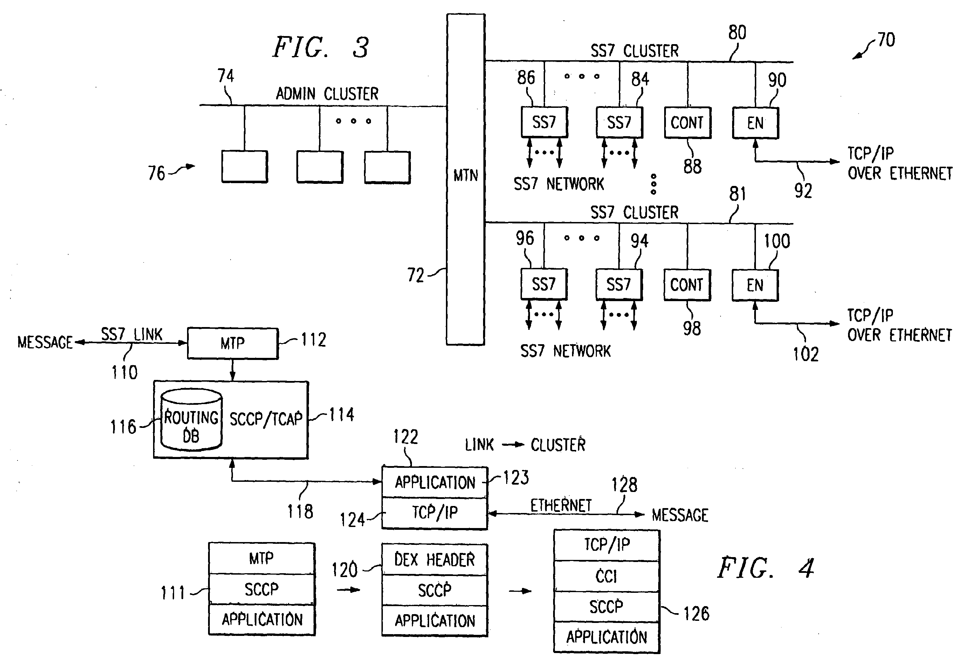

FIGURE 3 is a block diagram of a telecommunications network system 70 constructed according to an embodiment of the present invention. Telecommunications network node 70 may be a signal transfer point, service control point, service switching point, or any intelligent network (IN) or advanced intelligent network (AIN) node that requires Ethernet connectivity. System 70 includes a message transport network 72 which serves to interconnect the several processor clusters of system 70. Messages are transmitted between the processor clusters via message transport network 72. Administrative cluster 74 includes one or more processors 76 which oversee the operations of system 70. System 70 includes one or more SS7 processor clusters 80 and 81. SS7 clusters 80 and 81 each includes several interconnected processors, which include SS7 processors, controllers, and Ethernet processors. SS7 processors 84 and 86 of SS7 cluster 80 are coupled to the SS7 network to receive and transmit SS7 messages under the control of controller 88. SS7 processors 94 and 96 of SS7 cluster 81 are coupled to the SS7 network to receive and transmit SS7 messages under the control of controller 98. At least one Ethernet processor (90 and 100) is coupled to the SS7 processors and controller in the same cluster. The Ethernet processors have TCP/IP ports which are coupled to the home location register servers via TCP/IP over Ethernet links 92 and 102. System 70 may include other processor clusters (not shown) which perform other functionalities such as global title translation.

FIGURE 4 is a message flow diagram showing the processing of messages according to an embodiment of the present invention. A message received by system 70 over SS7 link 110 has a message format 111 that includes a message transfer part (MTP), a Signalling Connection Control Part (SCCP), and an application portion of the message. SS7 message format is described in detail in *Bell Communications Research Specification of Signalling System Number 7,* Bell Communications Research, TR-NWT-000246, Issue 2, Revision 2, December 1992. The MTP and SCCP portions of the message are removed and processed by MTP 112 and SCCP/TCAP 114 functions which may use data stored in a routing database 116. A DEX header is added to the message routing information used for transmitting the message 120 over an internal DEX bus. The resultant message is then processed by application process 123 and TCP/IP process 124. A TCP/IP header is added to the message 126, now also including the CCI (connection control interface), SCCP and the application portions of the original message. Message 126 is transmitted over Ethernet link 128 to the home location register. The reverse processing also operates to process messages from the home location register received over Ethernet links to be delivered to the SS7 network.

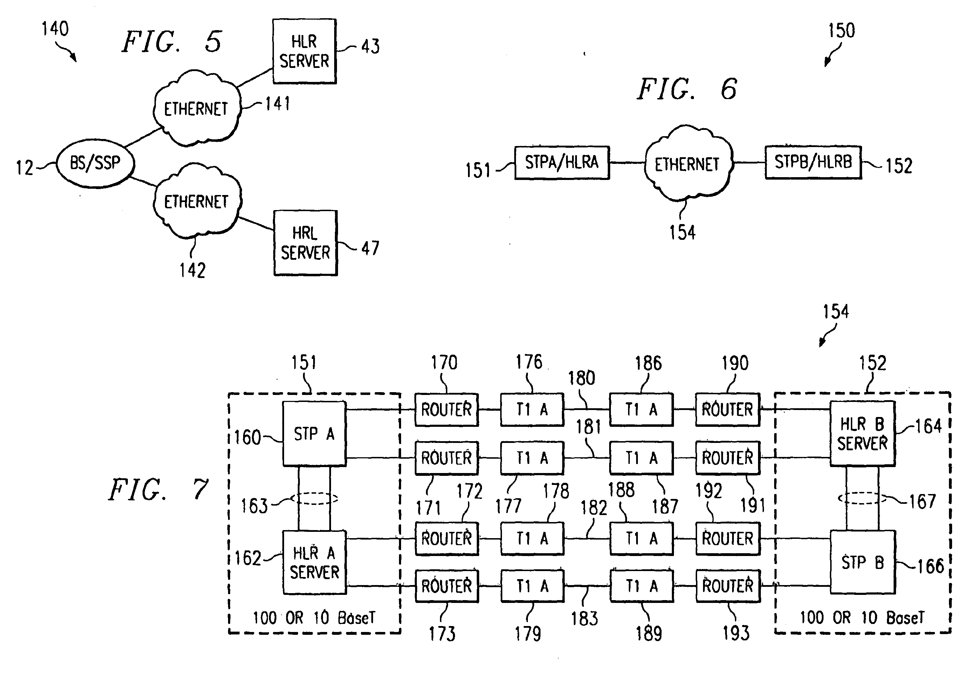

FIGURE 5 is a block diagram of a telecommunications network 140 configured according to another embodiment of the present invention. In the embodiment shown herein, base station/service switching point 12 is "directly" coupled to home location registers 43 and 47 via Ethernet connections 141 and 142.

FIGURE 6 is a block diagram of a telecommunications network 150 with co-located signal transfer point and home location register 151 and 152 configured according to another embodiment of the present invention. STP/HLR A 151 is coupled to STP/HLR B 152 via Ethernet connection 154. The co-located STP and HLR increases the reliability and reduces the number of T1 connections. High speed connectivity between STP and HLR is also possible. FIGURE 7 is a more detailed block diagram of the telecommunications network with co-located STP and HLR shown in FIGURE 6 configured according to an embodiment of the present invention. STP/HLR A 151 includes co-located STP A 160 coupled to HLR server A 162 via 100 or 10 base twisted pairs 163. STP/HLR A 151 is coupled to redundant paths including routers 170-173, T1 adapters 176-179. T1 adapters 176-179 are further coupled to T1 adapters 186-189 via T1 trunks 180-183. T1 adapters 186-189 are coupled to routers 190-193, which are in turn coupled to STP/HLR B 152.

FIGURE 8 is a more detailed block diagram of the telecommunications network 200 configured according to an embodiment of the present invention. Network 200 includes an STP or switch (SSP) 202 which may be one of the mated STP pair shown in FIGURE 2 or base station/SSP shown in FIGURE 5. STP/switch 202 is coupled to duplex routers 206-209. Routers 206-209 are coupled to routers 230-233 by two sets of T1 adapters 210-227 interconnected by T1 trunks 201. The number of T1 adapters depends on the needed capacity. The T1 links are duplex to maintain high reliability and 1:1 redundancy.

Constructed in this manner, high speed Ethernet connection (100Mbps) is employed in place of SS7 link sets (56 Kbps) in the SS7 network. For example, a base station or switch may be coupled to a home location register pair by Ethernet connections, or by an STP network that connects to the home location register by Ethernet links.

Although several embodiments of the present invention and its advantages have been described in detail, it should be understood that mutations, changes, substitutions, transformations, modifications, variations, and alterations can be made therein without departing from the teachings of the present invention, the scope of the invention being set forth by the appended claims.

## Claims

1. A telecommunications network (60)
comprising a network node (22, 70) and a home location register database (43),
wherein said network node includes at least one network signaling server (84) operable to receive and send network messages,
and wherein said home location register database stores subscriber data,
**characterized in that** said network node includes an Ethernet server (90) coupled to the network signaling server and operable to process the network messages and convert the network messages to TCP/IP messages and vice versa,
that said network node includes at least one TCP/IP port (92) coupled to the Ethernet server and operable to send and receive TCP/IP messages over Ethernet links,
that said home location register database includes at least one TCP/IP port (44) operable to send and receive TCP/IP messages over Ethernet links,
and that the TCP/IP port of the home location register database is coupled over Ethernet links to the TCP/IP port of the network node.

2. The telecommunications network as set forth in claim 1,
wherein the network node is a signal transfer point.

3. The telecommunications network as set forth in claim 1,
wherein the network node is a service switching point.

4. The telecommunications network as set forth in claim 1,
wherein the network node is a wireless base station.

5. The telecommunications network as set forth in claim 1,
wherein the home location register database is coupled to the network node via twisted pairs.

6. The telecommunications network as set forth in claim 1,
wherein the network node is coupled to a second redundant network node via Ethernet connectivity.

## Patentansprüche

1. Telekommunikationsnetzwerk (60)
umfassend einen Netzwerkknoten (22, 70) und eine Heimatdatei-Datenbank (43),
wobei der Netzwerkknoten mindestens einen Netzwerksignalisierungsserver (84) umfasst, der fähig ist, Netzwerknachrichten zu empfangen und zu senden;
und wobei die Heimatdatei-Datenbank Teilnehmerdaten speichert,
**dadurch gekennzeichnet,**
**dass** der Netzwerkknoten einen Ethernet-Server (90) umfasst, der mit dem Netzwerksignalisierungsserver gekoppelt und der fähig ist, die Netzwerknachrichten zu verarbeiten und die Netzwerknachrichten in TCP/IP-Nachrichten zu konvertieren und umgekehrt;
**dass** der Netzwerkknoten mindestens einen TCP/IP-Anschluss (92) umfasst, der mit dem Ethernet-Server gekoppelt und der fähig ist, TCP/IP-Nachrichten über Ethernet-Verbindungen zu senden und zu empfangen;
**dass** die Heimatdatei-Datenbank mindestens einen TCP/IP-Anschluss (44) umfasst, der fähig ist, TCP/IP-Nachrichten über Ethernet-Verbindungen zu senden und zu empfangen;
und **dass** der TCP/IP-Anschluss der Heimatdatei-Datenbank über Ethernet-Verbindungen mit dem TCP/IP-Anschluss des Netzwerkknotens gekoppelt ist.

2. Telekommunikationsnetzwerk nach Anspruch 1, wobei der Netzwerkknoten ein Signalübertragungsort ist.

3. Telekommunikationsnetzwerk nach Anspruch 1, wobei der Netzwerkknoten ein Dienstevermittlungsknoten ist.

4. Telekommunikationsnetzwerk nach Anspruch 1, wobei der Netzwerkknoten eine Funkbasisstation ist.

5. Telekommunikationsnetzwerk nach Anspruch 1, wobei die Heimatdatei-Datenbank mit dem Netzwerkknoten über paarverseilte Kabel gekoppelt ist.

6. Telekommunikationsnetzwerk nach Anspruch 1, wobei der Netzwerkknoten mit einem zweiten redundanten Netzwerkknoten über eine Ethernet-Verbindung gekoppelt ist.

## Revendications

1. Réseau de télécommunication (60)
comprenant un noeud (22, 70) et une base de données d'enregistreur de localisation nominal (43),
dans lequel ledit noeud comprend au moins un serveur de signalisation de réseau (84) pouvant fonctionner pour recevoir et envoyer des messages de réseau,
et dans lequel ladite base de données d'enregistreur de localisation nominal stocke les données d'abonné,
**caractérisé en ce que**
ledit noeud comprend un serveur Ethernet (90) couplé au serveur de signalisation de réseau et pouvant fonctionner pour traiter les messages de réseau et convertir les messages de réseau en messages TCP/IP et vice versa,
ledit noeud comprend au moins un port TCP/IP (92) couplé au serveur Ethernet et pouvant fonctionner pour envoyer et recevoir des messages TCP/1P sur des liaisons Ethernet,
ladite base de données d'enregistreur de localisation nominal comprend au moins un port TCP/IP (44) pouvant fonctionner pour envoyer et recevoir des messages TCP/IP sur des liaisons Ethernet,
et le port TCP/IP de la base de données d'enregistreur de localisation nominal est couplé sur des liaisons Ethernet au port TCP/IP du noeud de réseau.

2. Réseau de télécommunication selon la revendication 1, dans lequel le noeud de réseau est un point de transmission de signal.

3. Réseau de télécommunication selon la revendication 1, dans lequel le noeud de réseau est un commutateur d'accès aux services.

4. Réseau de télécommunication selon la revendication 1, dans lequel le noeud de réseau est une station de base sans fil.

5. Réseau de télécommunication selon la revendication 1, dans lequel la base de données d'enregistreur de localisation nominal est couplée au noeud de réseau via des paires torsadées.

6. Réseau de télécommunication selon la revendication 1, dans lequel le noeud de réseau est couplé à un second noeud de réseau redondant via une connectivité Ethernet.
